# EUROPEAN PATENT APPLICATION

(11) **EP 2 610 473 A1**
(43) Date of publication of application: **03.07.2013**
(21) Application number: 11819766.4
(22) Date of filing: 05.08.2011
(51) Int. Cl.: F02M 25/07, F01N 3/02, F01N 3/04, F01N 3/24, F02B 37/00, F02D 21/08

(54) **ENGINE EXHAUST-GAS PURIFICATION DEVICE**

(30) Priority: 24.08.2010 JP 2010187168
(71) Applicant: Mitsubishi Heavy Industries, Ltd., Tokyo 108-8215 (JP)
(72) Inventor: MURATA, Satoru, Tokyo 108-8215 (JP); UNSEKI, Takashi, Tokyo 108-8215 (JP)
(74) Representative: Henkel, Breuer & Partner
(86) International application number: PCT/JP2011/067952
(87) International publication number: WO 2012/026302

(57) **Abstract**

Provided is an engine exhaust-gas purification device which can meet exhaust gas regulations by addressing the ship itself, even when using conventional fuel rather than low sulphur fuel. An engine exhaust-gas purification device (1) which reduces and removes air pollutants in exhaust gas discharged from a main engine (10) is provided with: an exhaust-gas purification device (40) which is arranged in an exhaust system (L1) of the main engine (10) and which carries out a purification process on the entire amount of exhaust gas; and an exhaust gas recirculation device (60) which re-supplies part of the exhaust gas which has been introduced, as recirculation exhaust gas, from down-stream of the exhaust-gas purification device (40), into the main engine (10).

## Description

### {Technical Field}

The present invention relates to an engine exhaust gas purification device for application to, for example, a diesel engine or the like of a marine main engine.

### {Background Art}

Diesel engines as marine main engines are being subjected to strengthened exhaust gas regulations (applied to marine vessels) with regards to sulfur oxides (SOx), nitrogen oxides (NOx), and the like. As a result, the sulfur (S) content in fuel will be regulated.
However, currently, the amount of desulfurization equipment used by fuel manufacturers is not enough and, thus, a shortage in the production capability of fuel that meets the standards is expected. Therefore, there are concerns over a shortage in low-sulfur fuel that meets the standards and an increase in operating expenses of marine vessels in conjunction with an increase in fuel costs. Note that, with regards to the regulations on sulfur oxides, the rules allow for the use of an engine exhaust gas purification device or similar device on marine vessels in place of reducing the sulfur content in the fuel.

On the other hand, in (diesel) marine main engines, exhaust gas recirculation (EGR) in which, after combustion, a portion of the exhaust gas is collected and introduced into the intake air side, and recirculated back to the engine cylinders, is known as a technique for reducing nitrogen oxides in exhaust gas.
Conventional technology related to exhaust gas recirculation (hereinafter referred to as "EGR") includes the exhaust gas purification devices known as "scrubbers" described in, for example, Patent Documents 1 and 2. Cleaning is carried out in both of these conventional technologies by passing a portion of exhaust gas subjected to EGR through a scrubber.

### {Citation List}

### {Patent Literature}

### {PTL 1}

Japanese Patent No. 3304090

### {PTL 2}

Japanese Unexamined Patent Application Publication No. 2002-332919

### {Summary of Invention}

### {Technical Problem}

While the conventional technologies recited in both of the Patent Documents described above comprise a scrubber, the total amount of exhaust gas emitted from the diesel engine is not treated. Rather, only the portion of the exhaust gas supplied for EGR is treated. As a result, with the configurations of the conventional technologies, while it is possible to reduce the nitrogen oxides of the exhaust gas emitted from a diesel engine through EGR, it is not possible to reduce the sulfur oxides in the exhaust gas.
That is, while conventional scrubbers used to clean EGR exhaust gas are effective in reducing nitrogen oxide emissions, they are ineffective in reducing sulfur oxide emissions. Thus, conventional scrubbers cannot be used as engine exhaust gas purification devices on marine vessels in place of reducing the sulfur content in the fuel.

In light of this, it is desirable that an engine exhaust gas purification device be developed whereby both the sulfur oxides and nitrogen oxides in exhaust gas emitted from diesel marine main engines are reduced and the exhaust gas regulations applied to marine vessels can be met solely via processing on the marine vessel, without configuring the fuel.
In light of the conditions described above, an object of the present invention is to provide an engine exhaust gas purification device whereby exhaust gas regulations can be met via processing on a marine vessel even in cases where a conventional fuel is used in place of a low-sulfur fuel.

### {Solution to Problem}

The present invention employs the following means to resolve the problems described above.
An engine exhaust gas purification device according to the present invention is an engine exhaust gas purification device for reducing and removing harmful substances from exhaust gas emitted from a marine main engine. Such an engine exhaust gas purification device is provided with an exhaust gas purification device disposed in an exhaust line of the marine main engine, which purifies the entire amount of the exhaust gas; and an exhaust gas recirculation device that resupplies a portion of the exhaust gas that was introduced, from downstream of the exhaust gas purification device, as exhaust gas for recirculation to the marine main engine.

According to the engine exhaust gas purification device, the exhaust gas purification device disposed in the exhaust line of the marine main engine, which purifies the entire amount of the exhaust gas; and the exhaust gas recirculation device that resupplies a portion of the exhaust gas that was introduced from downstream of the exhaust gas purification device as exhaust gas for recirculation to the marine main engine are provided. Therefore, sulfur oxides in the exhaust gas are passed through the exhaust gas purification device and removed/reduced by being dissolved in a purification liquid; and generation of nitrogen oxides in the exhaust gas in the engine is reduced as a result of the oxygen concentration in the intake air being suppressed by the exhaust gas recirculation device.
Further, soot and dust in the exhaust gas are removed along with the sulfur oxides due to the entire amount of the exhaust gas being passed through the exhaust gas purification device and purified.

In the invention described above, the marine main engine preferably comprises an exhaust gas turbocharger, and the exhaust gas recirculation device preferably comprises a flow control valve for adjusting an introduction amount of the exhaust gas for recirculation and a recirculation heat exchanger for cooling the exhaust gas for recirculation. Further, the exhaust gas for recirculation preferably is supplied to a compressor of the exhaust gas turbocharger and compressed along with fresh air. As a result, the exhaust gas for recirculation that is adjusted by the flow control valve is passed through the exhaust gas purification device and the temperature thereof is lowered and, therefore, a low-temperature spec flow control valve can be used.

In this case, as necessary, the exhaust gas recirculation device preferably comprises a blower for pressurizing the exhaust gas for recirculation. That is, with such a configuration it is possible to pressurize appropriately using the blower even in cases where the engine exhaust gas purification device is disposed in such a manner that pressure loss is great when supplying the exhaust gas for recirculation to the compressor of the exhaust gas turbocharger. As a result, the exhaust gas for recirculation can be passed through the recirculation heat exchanger and reliably supplied to the compressor.

In the invention described above, the marine main engine preferably comprises an exhaust gas turbocharger, and the exhaust gas recirculation device preferably comprises a flow control valve for adjusting an introduction amount of the exhaust gas for recirculation and a blower for pressurizing the exhaust gas for recirculation. Further, the exhaust gas for recirculation is preferably supplied between a compressor of the exhaust gas turbocharger and an air cooler for cooling intake air. As a result, the exhaust gas for recirculation that is adjusted by the flow control valve is passed through the exhaust gas purification device and the temperature thereof is lowered and, therefore, a low-temperature spec flow control valve can be used. Furthermore, a recirculation heat exchanger for cooling the exhaust gas for recirculation is unnecessary because the exhaust gas for recirculation is supplied between the compressor of the exhaust gas turbocharger and the air cooler for cooling the intake air.

### {Advantageous Effects of Invention}

According to the engine exhaust gas purification device of the present invention described above, sulfur oxides and nitrogen oxides in exhaust gas emitted from a marine main engine can be removed/reduced. Therefore, strengthened regulations for exhaust gas applied to marine vessels can be met even in cases where a conventional fuel having high sulfur content is used. Therefore, inexpensive conventional fuel can be used and operating costs can be reduced and the need to change fuels and equipment in emission control area and other area is eliminated.

### {Brief Description of Drawings}

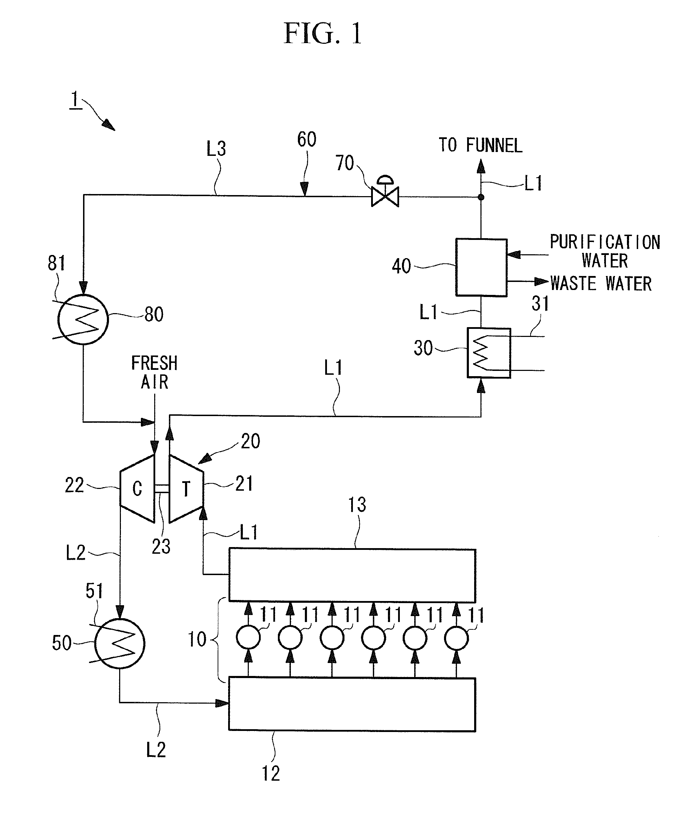

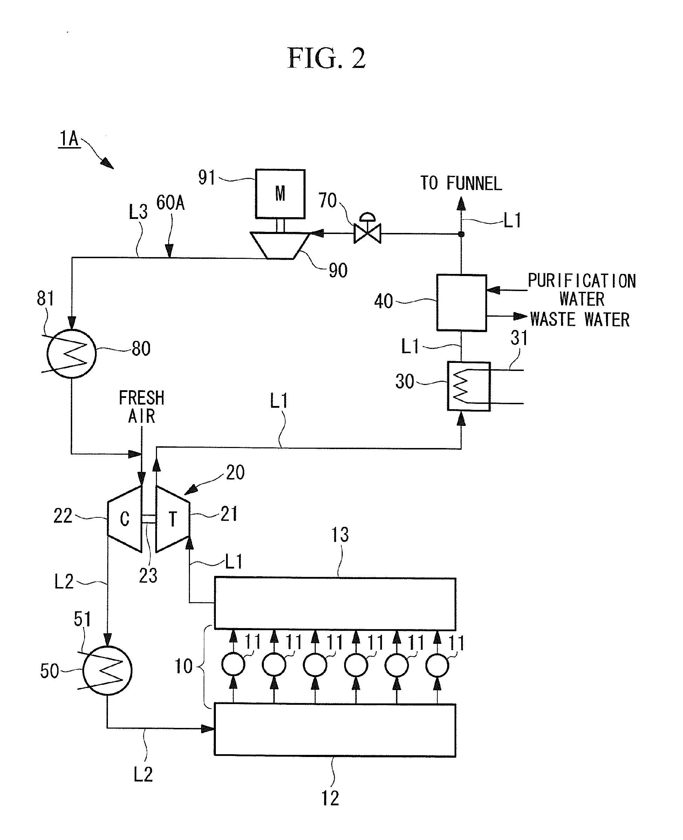

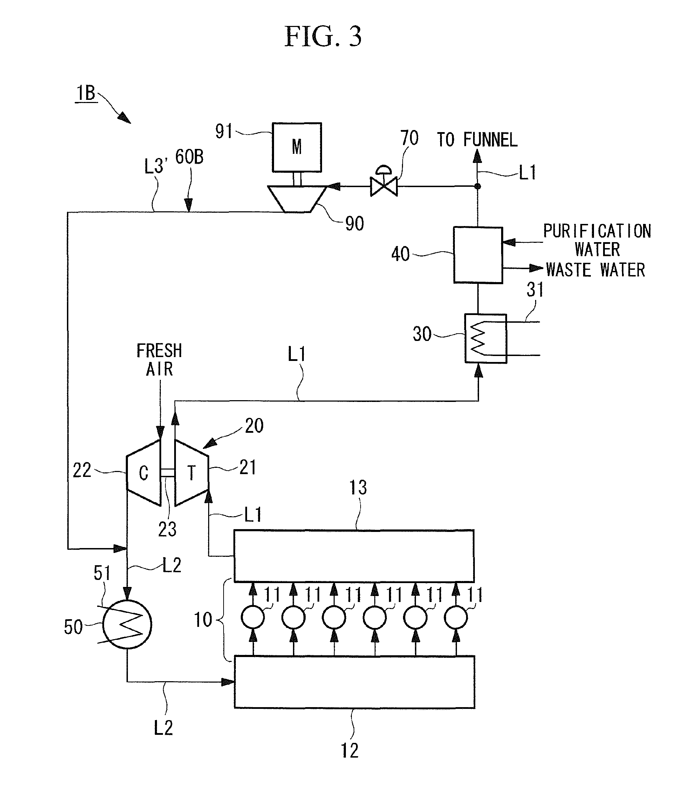

{Fig. 1}
   FIG. 1 is a diagram illustrating an embodiment of an engine exhaust gas purification device according to the present invention, and illustrates a schematic configuration in which the engine exhaust gas purification device is incorporated into an intake/exhaust line of a main engine, primarily that of a marine main engine.
{Fig. 2}
   FIG. 2 is a schematic configuration diagram illustrating a first modified example of the engine exhaust gas purification device depicted in FIG. 1.
{Fig. 3}
   FIG. 3 is a diagram illustrating another embodiment of the engine exhaust gas purification device according to the present invention, and illustrates a schematic configuration in which the engine exhaust gas purification device is incorporated into an intake/exhaust line of a main engine, primarily that of a marine main engine.

### {Description of Embodiments}

Hereinafter, an embodiment of an engine exhaust gas purification device according to the present invention will be described while referring to FIG. 1. Note that the schematic configuration of the engine exhaust gas purification device illustrated in FIG. 1 is a configuration example in which the engine exhaust gas purification device is incorporated into an intake/exhaust line of a main engine, primarily that of a marine main engine.
An engine exhaust gas purification device (hereinafter referred to as the "purification device") 1 illustrated in FIG. 1 is a device for reducing and removing harmful substances (air pollutants) such as sulfur oxides, nitrogen oxides, and the like from exhaust gas of a main engine 10 (e.g. a diesel engine) that is a main engine used for marine propulsion.

The main engine 10 used for marine propulsion is mounted in a marine vessel and the exhaust gas emitted from the main engine 10 is expelled into the atmosphere from a funnel.
The main engine 10 is provided with a plurality of cylinders 11, an intake manifold 12, and an exhaust manifold 13. Fuel supplied from a fuel feed line (not illustrated) is sprayed into each of the cylinders 11. This fuel combusts in the cylinders 11 due to the oxygen in the air supplied from the intake manifold 12. Therefore, thermal energy held by the fuel is converted to engine output in the main engine 10 and exhaust gas is generated due to this combustion.

The exhaust gas generated in each of the cylinders 11 is accumulated in the exhaust manifold 13 and guided through an exhaust line L1 to the funnel. The exhaust line L1 is provided with a turbine 21 of an exhaust gas turbocharger 20, an exhaust gas economizer 30, and an exhaust gas purification device 40.
The exhaust gas turbocharger 20 is a device for compressing intake air by using the energy held by the exhaust gas (kinetic energy and thermal energy) to rotate the turbine 21 at a high speed, and drive a compressor 22 using this torque. Note that reference numeral 23 in the drawings is an axis of rotation linking the turbine 21 and the compressor 22.

The exhaust gas economizer 30 is a heat exchanger for generating vapor by exchanging heat between the exhaust gas emitted from the main engine 10 and water supplied by a water supply pipe 31. That is, the exhaust gas economizer 30 effectively utilizes the thermal energy held by the exhaust gas and, therefore, is a device by which the thermal energy of the exhaust gas is collected and vapor is obtained.
The exhaust gas purification device 40 is a device for removing harmful substances contained in the exhaust gas, and separates the exhaust gas by trapping sulfur oxides, particles, and the like (in the exhaust gas) in droplets or liquid membranes of a liquid purification liquid such as water or the like. In this case, the exhaust gas processed by the exhaust gas purification device 40 is passed through the exhaust gas turbocharger 20 and the exhaust gas economizer 30 and, therefore, pressure is reduced and temperature is somewhat reduced. Thus, the reliability and durability of the exhaust gas purification device 40 are enhanced.

An intake line L2, which is provided with the compressor 22 of the exhaust gas turbocharger 20 and an air cooler (intercooler) 50, is connected to the intake manifold 12. Thus, intake air introduced from the intake line L2 is fed from the intake manifold 12 to each of the cylinders 11.
The air cooler 50 is a heat exchanger for cooling the intake air that was heated as a result of the compressing of the supercharger, and is effective for enhancing the fuel consumption efficiency and the output of the main engine 10. Note that in the drawings, reference numeral 51 is a water supply pipe for supplying cooling water of a cooling medium.

An exhaust gas recirculation line (hereinafter referred to as the "EGR line") L3 constituting an exhaust gas recirculation device 60 is provided so as to branch from the exhaust line L1 downstream of the exhaust gas purification device 40.
The EGR line L3 is provided with a flow control valve 70 for adjusting an introduction amount of an exhaust gas for recirculation (hereinafter referred to as the "EGR gas") and a recirculation heat exchanger 80 for cooling the EGR gas (hereinafter referred to as the "EGR heat exchanger"). The EGR line L3 of this embodiment is connected to the compressor 22 of the exhaust gas turbocharger 20 and, thus, is configured so that fresh air is compressed along with the EGR gas in the compressor 22.

The flow control valve 70 controls the degree of opening depending on the output control and the like of the main engine 10, and adjusts the amount of EGR gas introduced to the EGR line L3 from the exhaust line L1.
In this case, the EGR gas adjusted by the flow control valve 70 has passed through the exhaust gas purification device 40 and, thus, is cooled by the purifying liquid to a relatively low temperature. As a result, the flow control valve 70 can be used in low-temperature spec systems, and benefits from the perspectives of reliability, durability, and cost can be obtained. Further, particles such as ash and the like are removed from the EGR gas adjusted by the flow control valve 70 by the exhaust gas purification device 40 and, thus, the possibility of biting particles is reduced. As a result, excellent sealing and slidability can be maintained.

The EGR heat exchanger 80 is a heat exchanger for cooling the EGR gas by transferring heat to cooling water supplied from a water supply pipe 81. By using the EGR gas that has been cooled by the EGR heat exchanger 80, the fresh air and EGR air to be compressed by the compressor 22 becomes low temperature/high density. As a result, the compressing efficiency of the compressor 22 is enhanced.

Thus, the purification device 1 according to this embodiment is a device for reducing and removing harmful substances from exhaust gas emitted from a marine main engine. This purification device 1 is provided with the exhaust gas purification device 40 disposed in the exhaust line L1 of the main engine 10, which purifies the entire amount of the exhaust gas; and the exhaust gas recirculation device 60 that resupplies a portion of the exhaust gas that was introduced from downstream of the exhaust gas purification device 40 as EGR gas to the main engine 10. That is, the exhaust line L1 downstream of the exhaust gas economizer 30 and the EGR line L3 that branches from the exhaust line L1 of this embodiment differ from the configurations described in the conventional technology recited in the Patent Documents.

The exhaust gas purification device 40 (of this purification device 1) that is disposed on the exhaust line L1 of the main engine 10 is configured so that the entire amount of the exhaust gas is purified and, thus, the sulfur oxides, ash, and other particles in the exhaust gas are removed by the purification. As a result, the sulfur oxides contained in the exhaust gas downstream of the exhaust gas purification device 40 can be reduced and expelled into the atmosphere from the funnel having cleared the benchmark stipulated in the exhaust gas regulations applied to marine vessels.
That is, clean exhaust gas can be expelled that does not exceed the benchmarks stipulated in the exhaust gas regulations related to sulfur oxides without using a low-sulfur fuel that meets the standards on the fuel side as the fuel of the main engine 10. In other words, with regards to the sulfur oxide regulations, the purification device 1 of this embodiment can be used on the marine vessel side to comply instead of reducing the sulfur content on the fuel side. As a result, it is possible to use a conventional fuel with high sulfur content and operate at low cost.

Further, the exhaust gas recirculation device 60 that resupplies a portion of the exhaust gas that was introduced from downstream of the exhaust gas purification device 40 as EGR gas to the main engine 10 is provided and, thus, the exhaust gas recirculation device 60 can also reduce the nitrogen oxides in the exhaust gas to conventional levels by reducing the oxygen concentration in the intake air.
Thus, the exhaust gas emitted from the funnel into the atmosphere can meet the exhaust gas regulations of marine vessels with regards to sulfur oxides, nitrogen oxides, particles, and the like.

In the purification device 1 of this embodiment, the main engine 10 is provided with the exhaust gas turbocharger 20 and the exhaust gas recirculation device 60 is provided with the flow control valve 70 for adjusting the introduction amount of the EGR gas and the EGR heat exchanger 80 for cooling the EGR gas. Furthermore, the purification device 1 of this embodiment is configured so that the cooled EGR gas is supplied to the compressor 22 of the exhaust gas turbocharger 20 and compressed along with fresh air.
As a result, the temperature of the EGR gas adjusted by the flow control valve 70 is lowered and the sulfur oxides and particles in the EGR gas are removed by the EGR gas being passed through the exhaust gas purification device 40. Therefore, a low-temperature spec flow control valve 70 can be used and, moreover, defects caused by sulfur oxides and particles will not be prone to occur.

The exhaust gas economizer 30 described above is typically disposed near the funnel and, depending on layout restrictions on the marine vessel, distance from the exhaust gas purification device 40 to the exhaust gas turbocharger 20 disposed near the main engine 10 may increase. As a result, it is conceivable that piping length of the EGR line L3 may increase and that the pressure loss of the EGR gas may increase.
In such cases, with a purification device 1A of a modified example illustrated in FIG. 2, as necessary, an exhaust gas recirculation device 60A is provided with a blower 90 for pressurizing the EGR gas. Note that in the drawings, the blower 90 is driven by a motor 91.

By adding this blower 90 to the configuration, pressure can be increased appropriately by the blower 90 even in cases where the purification device 1A is disposed in such a manner that the pressure loss is great when supplying the EGR gas to the compressor 22 of the exhaust gas turbocharger 20 and, thus, the EGR gas can be passed through the EGR heat exchanger 80 and reliably supplied to the compressor 22.
Note that in the modified example illustrated in FIG. 2, constituents identical to those in the embodiment of FIG. 1 are given the same reference numerals and detailed descriptions thereof are omitted.

Next, another embodiment of the present invention will be described based on FIG. 3. Note that constituents identical to those in the embodiment and modified example described above are given the same reference numerals and detailed descriptions thereof are omitted.
In this embodiment, the main engine 10 is provided with the exhaust gas turbocharger 20 and an exhaust gas recirculation device 60B is provided with the flow control valve 70 for adjusting the introduction amount of the EGR gas and the blower 90 for pressurizing the EGR gas. The EGR gas that has been pressurized by the blower 90 is supplied to the intake line L2 via an EGR line L3'. The EGR gas, in this case, is supplied between the compressor 22 of the exhaust gas turbocharger 20 and the air cooler 50 for cooling the intake air of the intake line L2.

With this configuration, the sulfur oxides can be processed the same as in the embodiment described above. Furthermore, the EGR gas that is adjusted by the flow control valve 70 flows through the exhaust gas purification device 40 and the temperature thereof is lowered. Therefore, as with the embodiment described above, a low-temperature spec flow control valve 70 can be used.
In this embodiment, the EGR gas is supplied between the compressor 22 of the exhaust gas turbocharger 20 and the air cooler 50 for cooling the intake air. As a result, the EGR heat exchanger 80 for cooling the EGR gas is not needed. That is, the compressor 22 of this embodiment compresses only fresh air and the compressed fresh air is cooled by the air cooler 50 after converging at the intake line L2 with the EGR gas pressurized by the blower 90. After the cooling, the converged fresh air and EGR gas are supplied to the intake manifold 12. Note that with the configuration described above, the pressurized fresh air is made to converge with the EGR gas and, therefore, pressurization of the EGR gas by the blower 90 is necessary.

According to the purification devices 1, 1A, and 1B of the embodiments and the modified example described above, the entire amount of the exhaust gas passes through the exhaust gas purification device 40 and the exhaust gas recirculation devices 60, 60A, and 60B are also provided. Therefore, the sulfur oxides and nitrogen oxides in the exhaust gas emitted from the main engine 10 can be removed/reduced. As a result, even in cases where a conventional fuel with a higher sulfur content than new standard fuels is used, compliance with strengthened exhaust gas regulations applied to marine vessels can be achieved. Therefore, inexpensive conventional fuel can be used and operating costs can be reduced and the need to change fuels and equipment in emission control area and other area is eliminated.
Note that the present invention is not limited to the embodiments described above and can be arbitrarily modified without departing from the scope of the invention.

**{Reference Signs List}**

| | |
|---|---|
| 1, 1A, 1B | Engine exhaust gas purification device (purification device) |
| 10 | Main engine (main engine used for marine propulsion) |
| 11 | Cylinder |
| 12 | Intake manifold |
| 13 | Exhaust manifold |
| 20 | Exhaust gas turbocharger |
| 21 | Turbine |
| 22 | Compressor |
| 30 | Exhaust gas economizer |
| 40 | Exhaust gas purification device |
| 50 | Air cooler |
| 60, 60A, 60B | Exhaust gas recirculation device |
| 70 | Flow control valve |
| 80 | Recirculation heat exchanger (EGR heat exchanger) |
| 90 | Blower |
| L1 | Exhaust line |
| L2 | Intake line |
| L3, L3' | Exhaust gas recirculation line (EGR line) |

## Claims

1. An engine exhaust gas purification device for reducing and removing air pollutants from exhaust gas emitted from a marine main engine; comprising
an exhaust gas purification device disposed in an exhaust line of the marine main engine, which purifies the entire amount of the exhaust gas; and an exhaust gas recirculation device that resupplies a portion of the exhaust gas that was introduced, from downstream of the exhaust gas purification device, as exhaust gas for recirculation to the marine main engine.

2. The engine exhaust gas purification device according to claim 1, wherein the marine main engine comprises an exhaust gas turbocharger; and the exhaust gas recirculation device comprises a flow control valve for adjusting an introduction amount of the exhaust gas for recirculation and a recirculation heat exchanger for cooling the exhaust gas for recirculation; wherein
the exhaust gas for recirculation is supplied to a compressor of the exhaust gas turbocharger and compressed along with fresh air.

3. The engine exhaust gas purification device according to claim 1 or 2, wherein the exhaust gas recirculation device comprises a blower for pressurizing the exhaust gas for recirculation.

4. The engine exhaust gas purification device according to claim 1, wherein the marine main engine comprises an exhaust gas turbocharger; and the exhaust gas recirculation device comprises a flow control valve for adjusting an introduction amount of the exhaust gas for recirculation and a blower for pressurizing the exhaust gas for recirculation; wherein
the exhaust gas for recirculation is supplied between a compressor of the exhaust gas turbocharger and an air cooler for cooling intake air.
